Europäisches Patentamt

European Patent Office

Office européen des brevets

(11) Numéro de publication : **0 433 171 B1**

(19)

(12) # FASCICULE DE BREVET EUROPEEN

(45) Date de publication du fascicule du brevet :
**02.03.94 Bulletin 94/09**

(51) Int. Cl.$^5$ : **G06F 15/62**

(21) Numéro de dépôt : **90403549.0**

(22) Date de dépôt : **12.12.90**

(54) **Procédé de reconstruction tridimensionnelle sélective mettant en oeuvre des acquisitions bidimensionnelles de radiologie à deux énergies, notamment pour représenter la structure osseuse du corps d'un patient.**

(30) Priorité : **14.12.89 FR 8916567**

(43) Date de publication de la demande :
**19.06.91 Bulletin 91/25**

(45) Mention de la délivrance du brevet :
**02.03.94 Bulletin 94/09**

(84) Etats contractants désignés :
**DE NL**

(56) Documents cités :
**EP-A- 0 257 922**
**US-A- 4 506 327**
**JOURNAL OF THE OPTICAL SOCIETY OF AMERICA A. vol. 1, no. 6, juin 1984, pages 612-619, Optical Society of America; L.A. FEL-DKAMP et al.: "Practical cone-beam algorithm"**

(73) Titulaire : **GENERAL ELECTRIC CGR S.A.**
**100, rue Camille-Desmoulins**
**F-92130 Issy les Moulineaux (FR)**

(72) Inventeur : **Saint-Felix, Didier**
**Cabinet Ballot-Schmit, 7, rue Le Sueur**
**F-75116 Paris (FR)**
Inventeur : **Trousset, Yves**
**Cabinet Ballot-Schmit, 7, rue Le Sueur**
**F-75116 Paris (FR)**
Inventeur : **Picard, Catherine**
**Cabinet Ballot-Schmit, 7, rue Le Sueur**
**F-75116 Paris (FR)**
Inventeur : **Rougee, Anne**
**Cabinet Ballot-Schmit, 7, rue Le Sueur**
**F-75116 Paris (FR)**

(74) Mandataire : **Schmit, Christian Norbert Marie et al**
**Cabinet Ballot-Schmit 7, rue Le Sueur**
**F-75116 Paris (FR)**

EP 0 433 171 B1

## Description

La présente invention a pour objet un procédé d'imagerie radiologique 3 D de la structure osseuse d'un patient. Elle a pour principal avantage de limiter à la seule partie de l'espace occupée par cette structure osseuse les calculs nécessaires à la reconstruction. Elle améliore la qualité de cette reconstruction. Ceci est un avantage majeur lorsque l'on veut combiner cette représentation des os avec une représentation tridimensionnelle du réseau vasculaire afin de fournir au praticien des repères pour l'aider dans son diagnostic ou son geste thérapeutique.

On connaît, dans le domaine médical, des tomodensitomètres qui permettent de donner une représentation du coefficient d'absorption radiologique en tous les points d'une coupe du corps d'un patient examiné. On sait par ailleurs, en déplaçant le corps du patient à l'intérieur du tomodensitomètre, répéter l'examen de manière à acquérir la même information pour des coupes adjacentes. En multipliant ces investigations, on peut arriver à la connaissance du coefficient d'absorption en tous les éléments de volume (voxels) d'une partie importante du corps du patient. Par exemple, en acquérant des coupes séparées les unes des autres de 5 mm, et en réitérant l'opération 60 fois, on peut avoir une connaissance de ce qui se passe pour une section d'environ 30 cm de longueur du corps du patient.

Un tomodensitomètre comporte normalement un tube à rayons X placé en regard d'un multi-détecteur, c'est-à-dire un détecteur comprenant une multitude de cellules détectrices. Les cellules sont alignées sur un arc de cercle, le foyer du tube à rayons X est placé sur le cercle contenant cet arc de cercle et est diamétralement opposé à cet arc de cercle. L'ensemble tube-multi-détecteur est animé d'un mouvement de rotation dans le plan défini par le foyer du tube et l'arc de cercle du multi-détecteur. Ce plan définit un plan de coupe. Le patient à examiner est interposé transversalement à ce plan. En général, il est sensiblement aligné selon un axe qui est perpendiculaire à ce plan. La procédure totale d'acquisition nécessite la prise d'un certain nombre de vues, c'est-à-dire d'un certain nombre d'irradiations du multi-détecteur avec le tube à rayons X au travers du corps, alors que l'ensemble tube-multi-détecteur occupe des orientations différentes sur le cercle par rapport au corps à examiner. A chaque irradiation on relève les mesures d'atténuation d'un rayonnement X qui atteint chaque cellule.

Par un procédé dit de reconstruction, on sait à partir des mesures ainsi effectuées dans toutes les vues, déterminer la valeur du coefficient d'absorption radiologique en chacun des endroits de la coupe. La durée d'acquisition dans une coupe est de l'ordre de 1 seconde, la durée du calcul de reconstruction pour le coefficient d'absorption radiologique dans cette coupe est de l'ordre de quelques secondes. Le cycle complet dure environ 10 secondes.

En conséquence, la réitération de cette opération 60 fois, compte tenu des temps de déplacements longitudinaux supplémentaires du tomodensitomètre, et d'éventuels temps de refroidissement du tube à rayons X, conduit à un examen de l'ordre de 10 mn. Cette durée est bien trop grande: elle est pénible à supporter pour les patients. Elle interdit l'examen d'organes qui sont le siège de phénomènes dynamiques (coeur, intestin, vaisseaux sanguins). Elle entraîne une dégradation de la qualité de l'image en raison du bougé du patient, et elle abaisse la rentabilité de la machine.

Procéder directement à une reconstruction 3D (de toute la structure) à partir d'images en projection X à deux dimensions permet de remédier aux inconvénients cités ci-dessus. Grâce à la réduction du temps d'acquisition on peut réduire le temps d'examen à quelques secondes. On ouvre ainsi la voie aux examens d'organes dynamiques. Une mise en oeuvre connue de ce procédé consiste à remplacer le multi-détecteur à cellules alignées selon une rangée par un multi-détecteur à deux dimensions, dont les cellules de détection sont réparties sur une surface faisant face au tube. Pour chaque orientation de l'ensemble tube à rayons X-multi-détecteur, on acquiert alors une image dite "en projection" identique à une image de radiologie classique, à deux dimensions, révélant, par superposition, la contribution de chacun des voxels, du volume du corps examiné à l'image. Ce mode d'acquisition en volume permet d'éviter la réitération des 60 coupes successives citées plus haut. De manière à pouvoir reconstruire les structures, on acquiert aussi, avec cet appareil, un certain nombre de vues appelées alors projections.

US-A-4 506 327 décrit un tel procédé d'imagerie radiologique comportant l'acquisition d'images en projection à deux dimensions, selon deux séries d'orientations avec deux énergies données de rayonnement X, la combinaison énergétique deux à deux desdits images pour produire un jeu d'images de la structure osseuse sur lequel est mis en oeuvre un algorithme de reconstruction 3D de toute la structure osseuse.

Les algorithmes de reconstruction sont, dans ce cas, différents des algorithmes connus dans le cas 2 D en ce sens qu'ils doivent permettre la reconstruction en volume, c'est-à-dire la reconstruction de toutes les structures internes du corps. Si on appelle volume numérique l'ensemble des valeurs des coefficients d'absorption, affectés en correspondance à des adresses représentatives de la position dans le corps des éléments de volume qu'ils concernent, on peut dire que, dans la technique ancienne, la connaissance du volume numérique est acquise tranche par tranche, coupe par coupe, alors qu'elle est acquise en une seule fois avec des algorithmes de reconstruction en volume dans le cas présent. Un tel volume numérique est donc l'image à trois dimensions de la structure. De tels algorithmes de reconstruction ont par exemple été décrits dans: "Practical Cone-Beam Algorithm", L.A. Feldkamp, L.C. Davis & J.W. Kress, J.Opt. Soc. AM., Vol. 1, Numéro 6, juin 1984, pages 612-619. Ces algorithmes ont l'inconvénient de nécessiter un nombre d'opérations arithmétiques et un nombre de projections très élevés.

Lorsque la structure à reconnaître n'occupe qu'une faible partie du volume global qui l'entoure, il est cependant possible de réduire le nombre d'opérations et le nombre de projections tout en conservant, si ce n'est en l'améliorant, la qualité de l'image reconstruite. Un algorithme de reconstruction dont le temps de calcul est ainsi proportionnel au nombre de points à reconstruire est par exemple du type de celui décrit dans la demande de Brevet Français FR-A-2 642 198 déposée le 20.01.1989 et intitulée "Procédé de calcul de l'image en projection conique, par exemple au sens des rayons X, d'un objet tridimensionnel échantillonné, et procédé de reconstruction tridimensionnel d'un objet étudié utilisant ce procédé de calcul". Cette Demande de Brevet fait référence à un certain nombre de procédés de reconstruction dit de type algébrique, issus d'une publication intitulée "Images reconstruction from projections" due à G.T. Herman, Academic Press, 1980. La Demande de Brevet en question permet une amélioration d'une méthode de ce type.

Pour le réseau vasculaire une méthode a déjà été proposée qui présente ainsi l'avantage de limiter les calculs aux seuls voxels appartenant au volume d'intérêt. Les procédés d'imagerie angiographique comportent par ailleurs la mise en oeuvre de soustractions d'images. Dans un premier temps, on acquiert des images représentatives du corps du patient et, dans un deuxième temps, on réitère ces acquisitions en injectant un produit de contraste dans le réseau vasculaire de ce patient. Dans la deuxième acquisition, le réseau vasculaire n'est pas suffisamment visible. Cependant, en opérant une soustraction de type logarithmique élément d'image par élément d'image (pixel) des valeurs d'atténuation mesurées, on arrive à faire disparaître la structure environnant le réseau vasculaire. De cette manière, celui-ci apparaît alors avec un contraste relatif très grand.

La mise en oeuvre de la technique de soustraction n'est cependant pas envisageable avec des multi-détecteurs à une dimension (dont les cellules sont alignées sur un arc de cercle). En effet, elle entraînerait la réitération trop fréquente de l'injection du produit de contraste dans le réseau vasculaire du patient. Or, cette injection est traumatisante et il importe de la limiter.

De la connaissance des structures, en particulier de la structure vasculaire, on passe à la visualisation de ces structures. Par différents procédés de visualisation d'objets tridimensionnels, par exemple ceux dits de type lancer de rayon, on peut montrer l'arbre vasculaire comme s'il existait seul, c'est-à-dire dépouillé de tous les tissus qui l'environnent. Quand on montre cet arbre vasculaire sur un moniteur de télévision, on peut par exemple faire "tourner" devant le spectateur, de manière à ce que celui-ci puisse reconnaître facilement comment l'arbre vasculaire visualisé est constitué.

Dans de nombreuses applications le praticien, lorsqu'il examine une radiographie vasculaire classique, utilise la structure osseuse apparente sur la radiographie comme un repère anatomique par rapport auquel il situe les vaisseaux. Ce besoin s'exprime également lorsque le praticien visualise un réseau vasculaire reconstruit en 3 D. C'est pourquoi on a eu l'idée de représenter, au moment de la visualisation de l'arbre vasculaire 3 D, le squelette osseux 3 D. De cette manière, on peut plus facilement localiser les affections des patients.

L'obtention de la structure osseuse 3 D n'est cependant pas aisée. Dans une première solution envisageable, on pourrait reconstruire le volume numérique entier. Sur ce volume numérique reconstruit, on pourrait effectuer une opération de segmentation, de manière à extraire, en fonction d'une fourchette de valeurs du coefficient d'absorption radiologique, des structures internes qui correspondent à des os, et éliminer ainsi le reste des tissus. Cependant, cette manière de faire se heurte à deux difficultés principales. D'une part, le choix des seuils de segmentation est critique pour l'obtention d'une bonne représentation 3 D de la structure osseuse seule. D'autre part, comme déjà mentionné ci-dessus, la reconstruction 3 D nécessite un nombre de projections et un temps de calcul qui vont croissant avec la taille (le nombre de voxels) du volume à reconstruire. Reconstruire le volume numérique entier est par conséquent coûteux.

Dans l'invention, on procède complètement différemment pour obtenir la structure osseuse. Pour représenter la structure osseuse, on acquiert avec une série d'illuminations en volume, alors que l'ensemble tube à rayons X-multi-détecteur occupe différentes orientations autour du corps, une série de vues pour une énergie donnée du rayonnement X. On réitère cette opération pour une autre énergie du rayonnement X. On combine alors vue à vue les images en projection ainsi acquises pour extraire des images en projection de la contribution osseuse seule. Cette méthode de combinaison est explicitée ci-après. On obtient alors une image équivalente à celle que l'on obtiendrait après avoir disséqué tous les tissus mous du patient et effectué la radiographie de son seul squelette. Cette stratégie d'élimination des structures superflues permet d'obtenir une image des seules structures d'intérêt, les os. Elle procède de la même démarche que l'angiographie soustraite, laquelle permet d'obtenir une image des seules structures vasculaires opacifiées. Sachant de plus que la structure osseuse est une structure occupant une faible partie du volume, on peut alors utiliser un algorithme qui limite les calculs aux seuls voxels appartenant aux structures d'intérêt et tirer ainsi profit de cette approche originale.

Cette manière de faire permet d'obtenir plus rapidement la structure osseuse à reconstruire. En effet, en fonction de la précision (résolution spatiale et densitométrique) que l'on désire pour l'objet tridimensionnel reconstruit, on prendra au départ un nombre plus ou moins grand de projections. En théorie, pour reconstruire finement la structure osseuse, on doit prendre un grand nombre de vues, par exemple de l'ordre de 256, alors que le tube à rayons X émet un rayonnement dans une puis dans l'autre des deux énergies. Si par contre la structure osseuse ne doit servir que de repère, on se rend compte qu'un petit nombre de vues suffit. Ceci conduit à disposer d'une représentation osseuse grossière mais néanmoins suffisante pour interpréter la structure vasculaire.

Dans cet esprit, l'invention a donc pour objet un procédé d'imagerie radiologique de la structure osseuse du corps d'un patient, comportant
- une acquisition d'images radiologiques, en projection à deux dimensions, du corps du patient selon une première série d'orientations et avec une première énergie donnée d'un rayonnement X,
- la réitération de cette acquisition selon une deuxième série d'orientations, avec une deuxième énergie donnée du rayonnement X, les orientations de cette deuxième série d'orientations étant les mêmes que celles de la première série,
- la combinaison énergétique deux à deux des images en projection à deux dimensions correspondant à ces deux acquisitions pour produire un premier jeu d'images en projection à deux dimensions du corps du patient, représentatives de cette structure osseuse seule, et
- la mise en oeuvre d'un algorithme de reconstruction de cette structure à partir des images de ce jeu, caractérisé en ce que
- cet algorithme est du type détection-estimation dont le temps de calcul est proportionnel au nombre d'éléments de volume appartenant à la structure osseuse à reconstruire.

En pratique, pour tenir compte de la structure creuse représentée par les os, on utilisera de préférence un prétraitement du type de celui décrit dans la Demande de Brevet Français FR-A-2 641 099 déposée le 22.12.1988 et ayant pour titre : "Procédé de reconstruction et d'exploitation d'un objet en trois dimensions". Dans cette Demande de Brevet, la reconstruction est effectuée en deux étapes, une première étape dite de "détection" et une deuxième étape dite d'"estimation". L'étape de détection concerne l'extraction, avec les vues qui servent de base à la reconstruction, d'une région de support qui ne contient que les voxels ayant une forte probabilité d'appartenir à la structure osseuse. Dans le cas présent, les vues qui servent de base à la reconstruction sont les images obtenues après l'opération de combinaison énergétique.

Un deuxième aspect de l'invention porte sur une extension de la procédure d'acquisition, si l'on souhaite, au cours d'un même examen, obtenir à la fois la structure osseuse 3 D et la structure vasculaire 3 D. Pour cela on utilise deux séries d'images en projection à deux dimensions obtenues selon des mêmes orientations de l'ensemble tube à rayons X-multi-détecteur à deux dimensions. Dans l'acquisition vasculaire, on exécute la même chose. Mais au lieu de différencier des séries de projections avec une énergie donnée et avec une autre, on différencie des séries de projection avec et sans injection de produit de contraste. Dans l'invention, une des deux séries est commune aux deux modes de reconstruction, de sorte qu'au lieu d'effectuer quatre séries de projection, on n'en effectue que trois.

L'invention a, à cet effet, pour objet un procédé d'imagerie radiologique de la structure osseuse 3 D et du réseau vasculaire 3 D d'un patient, comportant les étapes suivantes:
- une acquisition d'images radiologiques en projection à deux dimensions du corps du patient selon une première série d'orientations, avec une première énergie donnée d'un rayonnement X
- la réitération de cette acquisition selon une deuxième série d'orientations, avec une deuxième énergie donnée du rayonnement X, la deuxième série d'orientations comportant au moins les orientations contenues dans la première série d'orientations
- la combinaison énergétique deux à deux des images en projection à deux dimensions correspondant aux orientations communes à ces deux acquisitions, pour produire un premier jeu d'images en projection à deux dimensions du corps du patient représentatives de la seule structure osseuse de ce patient,
- la mise en oeuvre d'un algorithme de reconstruction de cette structure osseuse à partir des images de ce premier jeu,
caractérisé en ce qu'il comporte:
- une acquisition d'images radiologiques en projection à deux dimensions du corps du patient selon une troisième série d'orientations, avec la deuxième énergie du rayonnement X et après injection d'un produit de contraste dans le réseau vasculaire de ce patient, cette troisième série d'orientations contenant au moins une ou toutes les orientations contenues dans la deuxième série,
- la soustraction deux à deux des images en projection à deux dimensions correspondant aux orientations communes à la deuxième et à la troisième séries d'orientations pour produire un deuxième jeu d'images en projection à deux dimensions du corps du patient représentatives de ce réseau vasculaire, et

- la mise en oeuvre d'un algorithme de reconstruction de ce réseau vasculaire à partir des images de ce deuxième jeu en vue de la représentation de ce réseau vasculaire, combinée avec la représentation de la structure osseuse, et
- en ce que les reconstructions de la structure osseuse et du réseau vasculaire sont entreprises séparément, chacune en appliquant un algorithme de détection-estimation dont le temps de calcul est proportionnel au nombre d'éléments de volume appartenant à la structure osseuse à reconstruire.

Elle a également pour objet en variante un procédé d'imagerie radiologique de la structure osseuse 3 D et du réseau vasculaire 3 D d'un patient, comportant les étapes suivantes:

- une acquisition d'images radiologiques en projection à deux dimensions du corps du patient selon une première série d'orientations, avec une première énergie donnée d'un rayonnement X
- la réitération de cette acquisition selon une deuxième série d'orientations, avec une deuxième énergie donnée du rayonnement X, la deuxième série d'orientations comportant au moins les orientations contenues dans la première série d'orientations
- la combinaison énergétique deux à deux des images en projection à deux dimensions correspondant aux orientations communes à ces deux acquisitions, pour produire un premier jeu d'images en projection à deux dimensions du corps du patient représentatives de la seule structure osseuse de ce patient,

caractérisé en ce qu'il comporte:

- une acquisition d'images radiologiques en projection à deux dimensions du corps du patient selon une troisième série d'orientations, avec la deuxième énergie du rayonnement X et après injection d'un produit de contraste dans le réseau vasculaire de ce patient, cette troisième série d'orientations contenant au moins une ou toutes les orientations contenues dans la deuxième série,
- la soustraction deux à deux des images en projection à deux dimensions correspondant aux orientations communes à la deuxième et à la troisième séries d'orientations pour produire un deuxième jeu d'images en projection à deux dimensions du corps du patient représentatives de ce réseau vasculaire, et
- l'obtention d'un troisième jeu d'images par combinaison, élément d'image à élément d'image, des éléments d'images des images des deux premiers jeux,
- la reconstruction de ce réseau vasculaire et de cette structure osseuse simultanément à partir des images de ce troisième jeu en vue de la représentation de ce réseau vasculaire, combinée avec la représentation de la structure osseuse, en mettant en oeuvre une seule fois un algorithme de reconstruction du type détection-estimation dont le temps de calcul est proportionnel au nombre d'éléments de volume appartenant aux structures vasculaire et osseuse à reconstruire.

L'invention sera mieux comprise à la lecture de la description qui suit et à l'examen des figures qui l'accompagnent. Celles-ci ne sont données qu'à titre indicatif et nullement limitatif de l'invention. Les figures montrent :

- Figure 1 : une représentation schématique d'une installation utilisable pour mettre en oeuvre le procédé d'imagerie selon l'invention ;
- Figures 2 et 3 : une représentation schématique du mode de composition des images en projection, en vue de produire des images en projection de chacun des deux jeux utiles aux reconstructions ;
- Figure 4 : un diagramme vectoriel qui permet de comprendre la combinaison énergétique ;
- Figure 5 : la représentation schématique d'un procédé de calibration de l'appareil radiologique utilisé en vue de la détermination des structures osseuses ;
- Figure 6 : les effets respectifs d'atténuation du rayonnement X en fonction de son énergie, d'une part, et en fonction d'épaisseurs de matériaux interposés ayant des comportements radiologiques différents, d'autre part;
- Figure 7 : une représentation schématique des particularités des altérations apportées par le détecteur à la mesure d'atténuation.

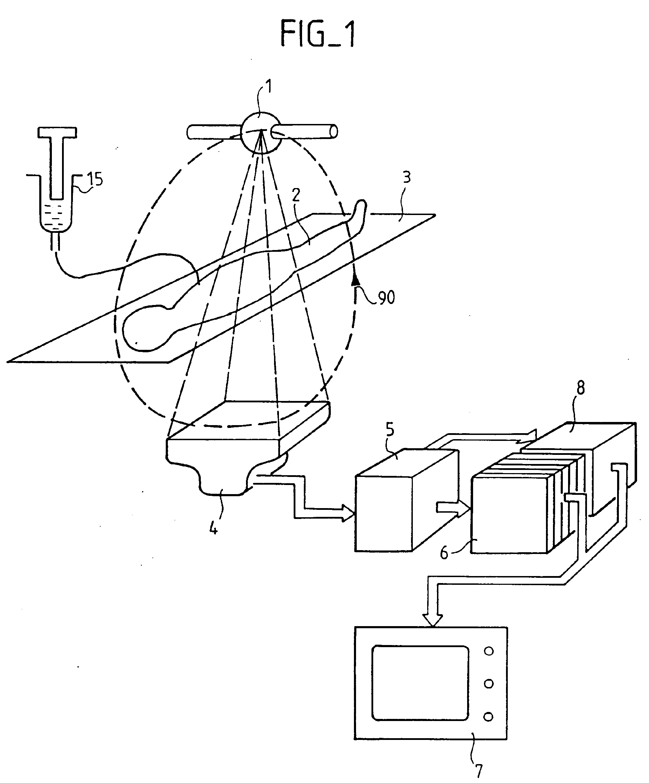

La Figure 1 représente une installation utilisable pour mettre en oeuvre le procédé de l'invention. Dans celle-ci un système d'acquisitions radiologiques 3 D comportant essentiellement un tube à rayons X 1, muni de ses circuits électroniques de commande non spécifiquement représentés, irradie le corps 2 d'un patient placé sur un lit porte-patient 3. A l'opposé du tube 1 par rapport au lit 3 est placé un détecteur 4 dit 2D qui reçoit le rayonnement X après que ce rayonnement ait traversé le corps 2. Dans un exemple, le détecteur 4 peut comporter un intensificateur d'images radiologiques en relation avec une caméra. Le signal délivré par le détecteur 4 est acheminé vers un organe de traitement 5 comportant essentiellement une unité arithmétique et logique et des mémoires. L'organe de traitement 5 effectue la reconstruction des structures internes du corps 2 qui sont ensuite stockées dans une mémoire 6. On peut admettre que la mémoire 6 est organisée en pages : chaque page comportant les valeurs des coefficients d'absorption mesurés à l'intérieur de tranches parallèles les unes aux autres dans le corps examiné. Un moniteur de visualisation 7 ainsi qu'un logiciel de visualisation associé permettent de représenter les structures vasculaires et osseuses comme si on avait disséqué les tissus qui les entourent. On peut aussi bien entendu représenter des images de coupe où, en définitive, on montre le contenu d'une des tranches dans le corps, cette tranche ayant une normale orientée dans une direction quelconque.

Un des apports de l'invention est la représentation simultanée du réseau vasculaire, par exemple mémorisé dans la mémoire 6, et de la structure osseuse qui serait mémorisée dans une autre mémoire: par exemple la mémoire 8. La mémoire 8 est également en relation avec l'organe de traitement 5 et le moniteur de visualisation 7. Pour acquérir les différentes images, l'ensemble tube à rayons X 1 et détecteur 4 est animé d'un mouvement selon la flèche 90 et, en fonction des différentes orientations de cet ensemble, des prises de vues radiologiques sont effectuées.

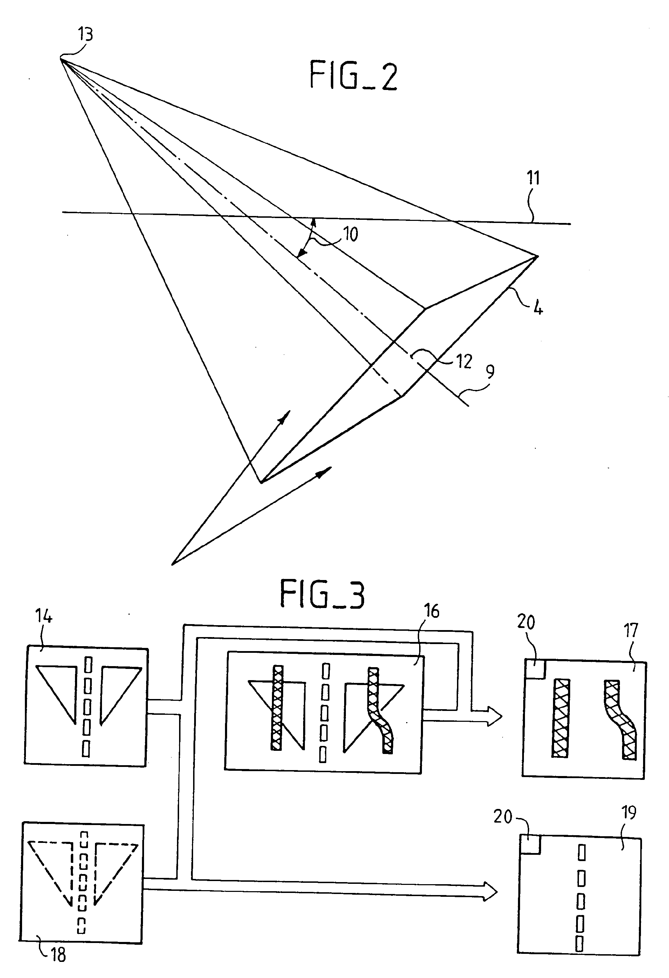

La figure 2 montre un axe principal d'irradiation 9 faisant un angle 10 par rapport à une direction de référence horizontale 11. Bien que le rayonnement parte en éventail, on peut caractériser chaque irradiation par une orientation 10 de son axe principal 9 par rapport à cette référence 11. L'axe principal 9 passe d'une part par le centre 12 du détecteur 4 et d'autre part, par le foyer 13 du tube 1.

La Figure 3 montre les protocoles d'acquisition vasculaires et osseux. Elle montre qu'on peut utiliser des projections 14 obtenues alors que le réseau vasculaire du patient n'a pas été injecté, pour les combiner avec d'autres projections 18 obtenues alors que le tube à rayons x émet un spectre d'énergie différent de celui qu'il émettait au moment de l'acquisition vasculaire. En combinant deux à deux selon un mode de combinaison énergétique que l'on étudiera plus loin, les informations des éléments d'image des projections 14 et 18, on est capable de produire un premier jeu d'images 19 en projection représentatives de la structure osseuse seule. En ce qui concerne le protocole vasculaire, pour chaque orientation de l'axe 9, on acquiert l'image 14 en projection, alors qu'aucun produit de contraste n'est injecté dans les vaisseaux du patient. Au moyen d'un dispositif d'injection 15 (voir Figure 1), on injecte ensuite un produit de contraste dans les vaisseaux du patient et on acquiert une autre image en projection 16 alors que l'axe 9 est orienté de la même façon.

Les vaisseaux apparaissent plus dans l'image en projection 16 qu'ils n'apparaissaient dans l'image 14. Selon un procédé de soustraction de type connu, on soustrait point à point le contenu des images 16 et 14, de manière à obtenir une image 17 d'un deuxième jeu d'images représentatives du réseau vasculaire seul.

On réitère cette opération pour un certain nombre d'orientations de l'axe 9. En pratique, on acquiert ainsi quelques dizaines d'images radiologiques en une ou deux secondes, selon une première série d'orientations. On réitère ces acquisitions pour une deuxième série d'orientations, chaque orientation de cette deuxième série étant orientée de la même façon dans l'espace qu'une orientation de la première série, et alors que le patient est injecté. Chaque série peut être acquise en une ou deux secondes. On est donc capable de produire le deuxième jeu d'images 17 en projection à deux dimensions représentatives du réseau vasculaire seul.

Dans l'invention, on reconstruit la structure osseuse ou la structure vasculaire selon un algorithme de reconstruction restreignant les calculs aux seuls voxels appartenant à la structure à reconstruire. De préférence, cet algorithme est du type de celui décrit dans la Demande de Brevet précitée, c'est-à-dire à détection préalable dans les images 17 ou 19 des régions où se trouvent les projections des structures visualisées (os ou vaisseaux). Après cette opération de détection, on peut procéder à une reconstruction simultanée des deux structures en combinant, en un troisième jeu d'images, deux à deux, les images 17 et 19 des deux premiers jeux. Par exemple la combinaison peut consister à additionner en chaque élément d'image d'une image du troisième jeu, les informations correspondantes des éléments d'image des images des deux premiers jeux. Dans ce cas la reconstruction proprement dite peut être plus rapide. Il reste néanmoins possible de reconstruire les images à trois dimensions des structures osseuses et vasculaires séparément.

Le mode de représentation simultané des structures osseuses ou vasculaires reconstruites séparément peut par ailleurs être le suivant. Sachant qu'après la reconstruction, les mémoires 6 et 8 contiennent les informations relatives aux structures vasculaires et osseuses respectivement, on peut, dans une mémoire d'images, additionner à chaque case mémoire, les contenus d'informations relatifs à la structure osseuse d'une part et à la structure vasculaire d'autre part.

On peut explorer la mémoire d'images ainsi élaborée par des procédés de visualisation 3 D. Dans ces conditions, on peut montrer sur le moniteur 7 une image dans laquelle les vaisseaux apparaîtront avec un fort contraste par rapport au fond de l'image, et dans laquelle à côté des vaisseaux, quand des structures osseuses sont vues, elles sont montrées avec un contraste différent, plus faible. On peut même accepter de montrer les vaisseaux qui se trouvent derrière des structures osseuses, dans l'axe de visualisation, et de ne pas montrer les vaisseaux qui se trouvent derrière d'autres vaisseaux selon cet axe de visualisation. Ceci a pour résultat que dans l'image, du fait de leur faible contraste, les os sont vus comme s'ils étaient translucides, le réseau vasculaire étant montré comme plus opaque.

Cette notion de transparence peut être remplacée par une représentation bicolore, les os étant par exemple représentés en couleur beige, alors que le réseau vasculaire est représenté en rouge. On peut également calculer et représenter une image "projection" simulée de l'objet tridimensionnel (vaisseaux + os) selon une incidence particulière que le praticien aura choisie et qui lui permet un meilleur diagnostic par rapport aux incidences de projection dont il dispose déjà.

On va maintenant expliquer comment le mode de composition énergétique permet d'extraire des images 19 à deux dimensions représentatives des structures osseuses à partir des images 14 et 18 acquises alors que le tube à rayons X 1 émet un rayonnement X selon une première ou une deuxième énergie. Les principes de base de la combinaison énergétique sont connus sous le nom de "décomposition par double énergie". Cette décomposition permet, lorsque l'on est en présence d'un objet composé de deux matériaux différents (par exemple ici justement l'os et les tissus mous) de calculer à partir de deux projections de cet objet (les projections 14 et 18), acquises avec des rayons X d'énergie différente, une projection 19 correspondant à la contribution d'un seul des matériaux composant l'objet, en l'occurrence les os.

Ces principes de base peuvent être trouvés dans les références suivantes: "A method for selective Tissue and Bone visualisation using Dual Energy scanned projection radiography", W.R. BRODY, G. BUTT, A. HALL and A. MACOVSKI, MED. PHYS., Vol. 8, Numéro 3, Mai/Juin 1981, pages 353-357; et "Generalised image combinations in Dual k Vp digital radiography" L.A. LEHMANN & Al., MED. PHYS., Vol 8, N° 5, sept-oct 1981, pages 659-667. Ces principes reposent sur l'hypothèse fondamentale suivante: pour l'ensemble des corps existants, l'espace des coefficients d'atténuation des rayons X, considéré comme fonction de l'énergie, est un espace à deux dimensions. Cette hypothèse est physiquement justifiée par le fait que l'absorption des rayons X résulte, aux énergies qui intéressent le domaine médical, de deux phénomènes seulement. Un premier phénomène est l'effet Compton, un deuxième phénomène est l'effet photoélectrique. Plus précisément, le comportement par rapport aux rayons X d'un matériau M donné est entièrement caractérisé par deux grandeurs scalaires. Une première grandeur scalaire est le coefficient d'absorption photoélectrique, noté $a_p$, et la deuxième est le coefficient d'absorption Compton, noté $a_c$. L'hypothèse fondamentale revient à supposer qu'il existe alors deux fonctions de l'énergie $f_p(E)$ et $f_c(E)$ indépendantes des matériaux considérés. Ces deux fonctions sont telles que, quel que soit le matériau M, et quelle que soit l'énergie E, un coefficient d'atténuation massique $\mu_M(E)$ peut s'écrire sous la forme:

$$I \qquad \mu_M(E)/\delta_M = a_p(M).f_p(E) + a_c(M).f_c(E)$$

où $a_p(M)$ et $a_c(M)$ sont fonction du numéro atomique Z et du numéro de masse A du matériau M considéré; $\delta_M$ est la densité du matériau M. Ceci revient à dire que les fonctions $f_p(E)$ et $f_c(E)$ forment une base de l'espace des coefficients d'atténuation.

En pratique, on préfère travailler dans une autre base dont les vecteurs de base sont deux autres fonctions de l'énergie E, linéairement indépendantes. Ces fonctions de base sont les coefficients d'atténuation de deux matériaux différents: par exemple d'une part de l'aluminium Al et, d'autre part, un Polyméthacrylate Po. Dans l'un de ces matériaux, l'absorption photoélectrique est prédominante, par contre, dans l'autre, c'est l'absorption Compton. On choisit l'aluminium et le Polyméthacrylate parce que l'aluminium a des propriétés d'absorption voisines de celle de l'os et parce que le Polyméthacrylate a des propriétés d'absorption voisines de celle des tissus mous qui entourent les os. Ceci présente l'intérêt de diminuer les erreurs dues à un certain nombre d'approximations intervenant dans la méthode. Il est possible bien entendu de choisir un autre couple de matériaux au départ. En particulier, le Polyméthacrylate pourrait être remplacé avantageusement par de l'eau. Le Polyméthacrylate a été choisi pour une plus grande simplicité d'utilisation dans une phase de calibration expliquée ci-après. Dans tout ce qui suit, pour des facilités de compréhension, on fait apparaître le choix (Po, Al). Mais le raisonnement théorique ne dépend absolument pas de ce choix.

Le changement de base annoncé s'obtient facilement en écrivant la relation I pour les matériaux Al et Po :

$$II \quad \left[ \begin{array}{l} \mu_{Al}(E)/\delta_{Al} = a_p(Al).f_p(E) + a_c(Al).f_c(E) \\ \\ \mu_{Po}(E)/\delta_{Po} = a_p(Po).f_p(E) + a_c(Po).f_c(E) \end{array} \right.$$

puis en inversant le système linéaire II afin d'obtenir l'expression de $f_p(E)$ et $f_c(E)$ en fonction de $\mu_{Al}/\delta_{Al}$ et de $\mu_{Po}/\delta_{Po}$ et enfin en remplaçant dans l'équation I écrite pour un matériau M, $f_p(E)$ et $f_c(E)$ par leurs expressions. De ces deux expressions II, on peut donc déduire l'expression des fonctions $f_p(E)$ et $f_c(E)$. Celles-ci sont elles-mêmes données maintenant en fonction des coefficients d'absorption globaux $\mu$ de l'aluminium et du Polyméthacrylate. Si on remplace alors, dans la première expression de $\mu_M(E)$, ces fonctions $f_p(E)$ et $f_c(E)$ par leurs expressions en fonction de $\mu_{Al}$ et $\mu_{Po}$, on obtient une expression de la forme suivante:

$$\text{III} \qquad \mu_M(E)/\delta_M = K(M).\mu_{Al}(E)/\delta_{Al} + H(M).\mu_{Po}(E)/\delta_{Po}$$

ou encore:

$$\text{IV} \qquad \mu_M(E) = K(M).\mu_{Al}(E).\delta_M/\delta_{Al} + H(M).\mu_{Po}(E).\delta_M/\delta_{Po}$$

$K(M)$ et $H(M)$ sont des grandeurs scalaires dépendant des numéros Z et A du matériau M et des matériaux Al et Po.

On va définir maintenant un "plan des matériaux". Considérons un rayon X traversant un corps composé éventuellement de plusieurs matériaux. En chaque point (x, y, z) de l'objet situé sur le trajet du rayon X, trajet que nous appellerons chemin C, on définit la fonction $\mu(x,y,z,E)$ qui est la valeur du coefficient d'atténuation du matériau présent dans l'objet au point (x,y,z) pour l'énergie E. Localement, chaque matériau a un coefficient d'atténuation vérifiant la relation IV, c'est-à-dire s'exprimant comme une combinaison linéaire de $\mu_{Al}$ et $\mu_{Po}$. Par conséquent, l'intégrale des coefficients d'atténuation le long du chemin C vérifie la relation quelle que soit l'énergie E :

$$\text{V} \qquad \int_C \mu(x,y,z,E)\,ds = t_{Po}.\mu_{Po}(E) + t_{Al}.\mu_{Al}(E)$$

$$\text{avec} \qquad t_{Po} = (1/\delta_{Po}).\int_C H(x,y,z)\,\delta_M(x,y,z)\,ds$$

$$\text{et} \qquad t_{Al} = (1/\delta_{Al}).\int_C K(x,y,z)\,\delta_M(x,y,z)\,ds$$

Dans ces expressions, $t_{Al}$ et $t_{Po}$ s'expriment en unité de longueur, et sont appelées épaisseurs équivalentes en Aluminium et Polyméthacrylate.

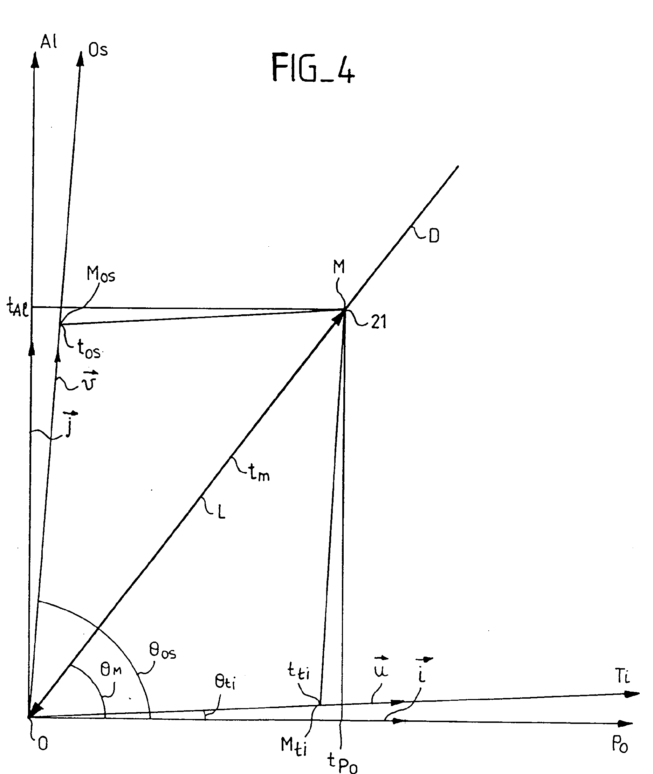

On définit alors un espace affine bidimensionnel, que l'on appelle "plan des matériaux", de repère orthonormé (O, $\vec{i}$, $\vec{j}$): voir figure 4. Un objet, traversé par un rayon X d'énergie quelconque a, dans cet espace affine, un point associé et un seul : c'est le point M de coordonnées $(t_{Po}, t_{Al})$.

On va voir que les coordonnées polaires $(t_m, \Theta_M)$ du vecteur OM sont particulièrement bien adaptées à la représentation d'un matériau homogène. De l'expression V on peut déduire, pour un matériau homogène de longueur L et quelle que soit l'énergie E :

$$\text{VI} \qquad \mu_M(E).L = t_{Po}.\mu_{Po}(E) + t_{Al}.\mu_{Al}(E)$$
$$\text{avec} \qquad t_{Po} = H(M)\delta_M.L/\delta_{Po}$$
$$\text{et} \qquad t_{Al} = K(M)\delta_M.L/\delta_{Al}$$

On déduit deux conséquences à cette formulation, dans le plan des matériaux:

- d'une part, un matériau donné est caractérisé par un rapport pour ce matériau entre $t_{Al}$ et $t_{Po}$. Ce rapport est invariant par changement d'épaisseur ou même changement de densité du matériau. Ceci signifie que l'angle $\Theta_M$, rapporté à l'axe Po de la demi-droite D qui porte le point M (point 21 sur la figure 4), est caractéristique du matériau. Pour l'os, on parlera ainsi de l'angle caractéristique de l'os, soit $\Theta_{os}$. On a la relation:

$$\text{VI bis} \qquad tg(\Theta_M) = t_{Al}/t_{Po} = \{K(M)/H(M)\}\{\delta_{Al}/\delta_{Po}\}$$

- d'autre part, la norme du vecteur OM, qu'on appelle épaisseur équivalente $t_M$, est proportionnelle au produit densité-épaisseur $\delta_M.L$ du matériau M :

$$\text{VI ter} \qquad t_M = |\overrightarrow{OM}| = t_{Po}.\cos\Theta_M + t_{Al}.\sin\Theta_M$$

$$= \{H(M).\cos\Theta_M\,/\delta_{Po} + K(M).\sin\Theta_M\,/\delta_{Al}\}.\delta_M.L$$

Si le matériau M n'a pas une densité constante mais que cette densité est variable spatialement (c'est le cas de l'os, qui peut être plus ou moins compact), alors l'épaisseur équivalente est proportionnelle cette fois-ci à l'intégrale, le long du chemin, de la densité du matériau considéré. On a en effet alors, d'après l'expression

de $t_{Po}$ et $t_{Al}$ dans V :

$$\text{VII} \qquad t_{Po} = H(M)/\delta_{Po} \cdot \int_C \delta(x,y,z)\,ds$$

$$\text{et} \qquad t_{Al} = K(M)/\delta_{Al} \cdot \int_C \delta(x,y,z)\,ds$$

L'angle $\Theta_M$ est encore défini par le rapport $t_{Al}/t_{Po}$, rapport indépendant de la densité :

$$\text{VII bis} \qquad tg(\Theta_M) = t_{Al}/t_{Po} = \{K(M)/H(M)\}\{\delta_{Al}/\delta_{Po}\}$$

et l'épaisseur équivalente, soit $|OM|$, vaut :

$$\text{VII ter}$$

$$t_M = |OM| = \{H(M)\cdot\cos\Theta_M /\delta_{Po} + K(M)\cdot\sin\Theta_M /\delta_{Al}\} \int_C \delta(x,y,z)\,ds$$

Dans le cas qui nous intéresse, le corps traversé par le rayon X est composé de plusieurs matériaux, pour le moins des os et des tissus mous, d'angles caractéristiques respectivement $\Theta_{os}$ et $\Theta_{ti}$.

On accepte ici de considérer que tous les tissus mous sont équivalents. Ceci n'est pas vrai dans la mesure où, par exemple, les muscles et les graisses n'ont pas les mêmes propriétés d'absorption, c'est-à-dire pas les mêmes coefficients $a_p$ et $a_c$. Cependant, compte tenu de ce que leurs angles sont sensiblement comparables, et en tous cas fort éloignés de celui de l'os, cette approximation se justifie.

on peut, dans le plan des matériaux, représenter le vecteur $\overrightarrow{OM}$ correspondant au corps, comme étant la somme des deux vecteurs $\overrightarrow{OM}_{os}$ et $\overrightarrow{OM}_{ti}$, correspondant chacun aux contributions de l'os et des tissus mous. Chacun de ces deux vecteurs fait un angle de $\Theta_{os}$ et $\Theta_{ti}$ respectivement avec $(O,\vec{I})$, et a une longueur de respectivement $t_{os}$ et $t_{ti}$. Ces longueurs sont proportionnelles au produit épaisseur-densité d'os et de tissu mou traversées.

La connaissance de $\Theta_{os}$ et $\Theta_{ti}$ permet d'effectuer un changement de repère dans le plan des matériaux, pour passer du repère $(O,\vec{I},\vec{J})$ au repère $(O,\vec{u},\vec{v})$ avec $\vec{u}$ vecteur unitaire porté par l'axe des tissus mous et $\vec{v}$ vecteur unitaire porté par l'axe des os. Ainsi, on peut exprimer les "longueurs" équivalentes os et tissu mou en fonction des "longueurs équivalentes Aluminium et Polyméthacrylate":

$$\text{VIII} \qquad t_{os} = \{-t_{Po}\sin\Theta_{ti} + t_{Al}\cos\Theta_{ti}\}/\sin(\Theta_{os} - \Theta_{ti})$$
$$t_{ti} = \{t_{Po}\sin\Theta_{os} - t_{Al}\cos\Theta_{os}\}/\sin(\Theta_{os} - \Theta_{ti})$$

On va voir maintenant que l'on peut déterminer, pour un corps donné, les "épaisseurs équivalentes" $t_{Po}$ et $t_{Al}$ à partir des mesures d'atténuation de rayonnement faites à deux énergies d'émission du rayonnement X différentes, rayonnements auxquels on soumet ce corps.

Dans le cas d'un rayonnement monochromatique d'énergie E, on peut écrire la relation suivante :

$$\text{IX} \qquad I = I_0 \cdot e^{-\int_C \mu_M(x,y,z,E)\,ds}$$

où I est l'intensité de rayonnement mesurée sur un détecteur après traversée de l'objet, et $I_0$ est l'intensité qui serait mesurée sur le même détecteur si le rayonnement n'avait pas traversé l'objet ($I_0$ est appelé dans la suite Intensité à feu nu).

L'équation IX se transforme aisément en

$$\text{IX bis} \qquad Ln(I_0/I) \;=\; -\int_C \mu_M(x,y,z,E).ds$$

En appliquant la relation V, on obtient alors :

$$X \qquad Ln(I_0/I) \;=\; t_{Po}.\mu_{Po}(E) + t_{Al}.\mu_{Al}(E)$$

Dans la suite, on pose U ou V = $Ln(I_0/I)$.

Soit maintenant deux énergies E1 et E2. L'équation X écrite pour chacune des deux énergies permet d'obtenir le système :

$$XI \qquad U = t_{Po}.\mu_{Po}(E_1) + t_{Al}.\mu_{Al}(E_1)$$
$$V = t_{Po}.\mu_{Po}(E_2) + t_{Al}.\mu_{Al}(E_2)$$

système qui s'inverse aisément pour obtenir $t_{Po}$ et $t_{Al}$ en fonction des mesures $U_1$ et $U_2$ :

$$XII \qquad t_{Po} = c_{11}.U + c_{12}.V$$
$$t_{Al} = c_{21}.U + c_{22}.V$$

Les coefficients $c_{11}$, $c_{12}$, $c_{21}$, $c_{22}$ ne dépendent que des coefficients d'absorption de l'Aluminium et du Polyméthacrylate aux énergies $E_1$ et $E_2$.

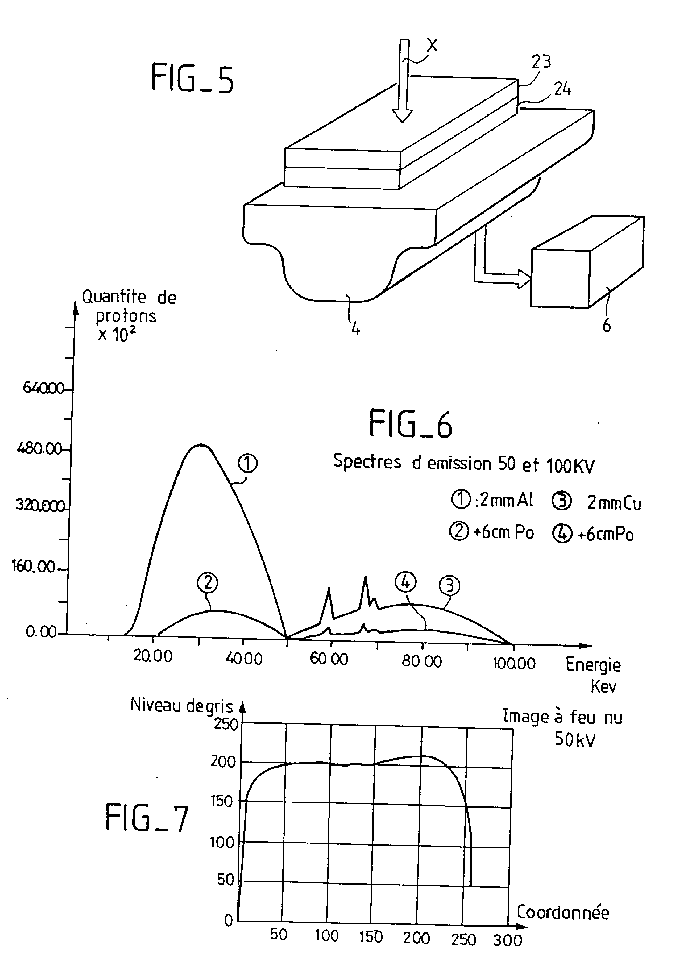

Dans le cas réel rencontré lors d'un examen radiologique, le spectre d'émission des rayons X n'est pas monochromatique (voir figure 6). Par exemple, lorsque le tube à rayons X est alimenté en haute tension à 50 kV, les énergies $E_1$ des rayons X émis sont réparties entre environ 10 et 50 keV. Lorsque le tube est alimenté à 100 kV, les énergies $E_2$ des rayons X sont réparties entre 40 et 100 keV. En figure 6, on a représenté le spectre des rayons X pour les tensions d'alimentation 50 et 100 kV.

L'absorption d'un rayonnement X de spectre énergétique S(E) au travers d'un corps s'exprime alors par l'équation suivante XIII, dont l'équation IX est un cas particulier.

$$XIII \qquad I = I_0.\int_E S(E).e^{-\int_C \mu_M(x,y,z,E).ds} \, dE$$

On n'a plus alors, comme on l'avait en IX bis, égalité entre la mesure U (U = $Ln(I_0/I)$) et l'intégrale des coefficients d'atténuation le long du chemin C.

Si l'on veut appliquer la méthode de décomposition par double énergie expliquée plus haut, il est par conséquent nécessaire d'effectuer un certain nombre d'adaptations, aussi bien de la physique à la méthode que de la méthode à la physique.

La première adaptation est de diminuer, dans la mesure du possible, de manière physique l'aspect non monochromatique du spectre. Pour modifier le spectre des rayons X en vue de le rendre plus proche d'un spectre monochromatique, on effectue une filtration du rayonnement par une épaisseur de matériau (métallique par exemple) qui absorbe plus les faibles énergies (rayons x mous) que les énergies élevées. Dans chacun des spectres, on diminuera donc la contribution de la partie gauche du spectre. Ceci présente également l'intérêt de diminuer, et même de rendre pratiquement vide, la région d'intersection des deux spectres correspondant aux deux tensions d'alimentation du tube à rayons X. Ainsi, aucune des énergies du spectre $E_1$ n'est égale à une énergie du spectre $E_2$. Par exemple, on a représenté figure 6 le spectre des rayons X pour la tension 50 kV, après filtration par 2 mm d'Aluminium, et le spectre des rayons X pour la tension 100 kV, après filtration par 3 mm de Cuivre. On constate que l'intersection des deux spectres est très petite.

L'adaptation de la méthode à la nature spectrale du rayonnement passe par une généralisation des équations linéaires XII en deux développements de Taylor à l'ordre p (ici pour simplifier p = 3), de manière à tenir compte de l'inégalité mise en évidence à la suite de XIII :

$$XIV \qquad t_{Po} = c_{11} + c_{12}U + c_{13}V + c_{14}U^2 + c_{15}V^2 + c_{16}UV + c_{17}U^3 + c_{18}V^3$$
$$t_{Al} = c_{21} + c_{22}U + c_{23}V + c_{24}U^2 + c_{25}V^2 + c_{26}UV + c_{27}U^3 + c_{28}V^3$$

Dans ce système, U désigne la mesure effectuée pour un rayonnement de spectre énergétique S1(E), dit rayonnement "basse énergie", et V désigne la mesure effectuée pour un rayonnement de spectre énergétique S2(E), dit rayonnement "haute énergie". Ici encore, les coefficients $c_{ij}$ ne dépendent que des caractéristiques des matériaux de base Al et Po.

Les coefficients $c_{ij}$ sont de préférence estimés, plutôt que déterminés de manière théorique, au cours d'une phase de calibration, expliquée ci-après :

On soumet le détecteur 4 à un rayonnement X "basse énergie", en l'absence d'objet entre la source et le détecteur, ce qui permet la mesure de l'intensité à feu nu $I_{01}$. On mesure de la même façon $I_{02}$, intensité à feu nu pour un rayonnement X "haute énergie".

On soumet ensuite une épaisseur 23 connue d'Aluminium, $t_{Al}$ superposée à une épaisseur 24 connue de Polyméthacrylate, $t_{Po}$, au même rayonnement "basse énergie", ce qui permet la mesure de l'intensité $I_1$, puis au même rayonnement "haute énergie", ce qui permet la mesure de l'intensité $I_2$. On en déduit U et V

On renouvelle l'opération de mesure de $I_1$ et $I_2$ pour un certain nombre de couples ($t_{Po}$, $t_{Al}$), soient N couples. A chaque couple correspond un point M dans le "plan des matériaux". On appelle alors "couples différents" deux couples, de points correspondants M1 et M2, tels que les vecteurs OM1 et OM2 ne sont pas colinéaires.

Pour chaque couple, on applique les équations XIV. On obtient alors deux systèmes d'équations linéaires s'écrivant sous une forme matricielle XV où les inconnues sont les coefficients $c_{ij}$, la matrice du système étant appelée "matrice des mesures" :

$$XV$$

$$
\begin{vmatrix} t_{Po1} \\ t_{Po2} \\ --- \\ \\ t_{PoN} \end{vmatrix} = \begin{vmatrix} 1 & U_1 & V_1 & U_1^2 & V_1^2 & U_1V_1 & U_1^3 & V_1^3 \\ 1 & U_2 & V_2 & U_2^2 & V_2^2 & U_2V_2 & U_2^3 & V_2^3 \\ - & -- & -- & --- & --- & ---- & --- & --- \\ \\ 1 & U_N & V_N & U_N^2 & V_N^2 & U_NV_N & U_N^3 & V_N^3 \end{vmatrix} \begin{vmatrix} c_{11} \\ c_{12} \\ --- \\ \\ c_{18} \end{vmatrix}
$$

de même pour l'aluminium :

$$
\begin{vmatrix} t_{Al1} \\ t_{Al2} \\ --- \\ \\ t_{AlN} \end{vmatrix} = \begin{vmatrix} \text{MATRICE DES MESURES} \end{vmatrix} \begin{vmatrix} c_{21} \\ c_{22} \\ --- \\ \\ c_{28} \end{vmatrix}
$$

Dans le cas d'un développement de TAYLOR à l'ordre 3, huit couples différents (N=8) suffisent à l'inversion de la matrice des mesures et au calcul des coefficients $c_{ij}$. En pratique, on préfère utiliser dans la phase de calibration beaucoup plus que huit couples différents, et on inverse alors la matrice des mesures au sens des moindres carrés.

Après la phase de calibration qui a permis de déterminer les coefficients $c_{ij}$, on pratique les acquisitions "basse énergie" et "haute énergie" pour le corps que l'on veut examiner. On obtient alors deux mesures U et V par élément d'image pour les images 14 et 18. Les épaisseurs équivalentes de Polyméthacrylate et d'Aluminium sont alors le résultat des équations XIV appliquées à ces valeurs U et V. Les épaisseurs équivalentes Os et Tissus mous sont alors le résultat des équations VIII.

Dans le cas de la radiologie (projection 2D de l'objet), les mesures des intensités I et $I_0$ sont remplacées par les niveaux de gris alloués au point (pixel) dans l'image 2D correspondant au point du multi-détecteur plan qui intercepte le trajet du rayon. Ainsi, si G est le niveau de gris pour un pixel donné dans l'image avec objet, et si $G_0$ est le niveau de gris pour le même pixel dans l'image à feu nu, on écrit :

XVI $\qquad U = Ln(I_0/I) = Ln(G_0/G)$, il en est de même pour V.

Les épaisseurs équivalentes pour l'objet à examiner doivent être alors calculées pixel par pixel, à partir des mesures faites pixel par pixel dans les images "basse énergie" (14) et "haute énergie" (18). L'image résultat, dite "image épaisseur équivalente" (19) est formée par l'attribution à chacun de ses pixels d'un niveau de gris égal ou proportionnel à la valeur de l'épaisseur équivalente (choisie) calculée pour ce pixel.

On obtient alors, par exemple, une image "épaisseur équivalente d'os", où le niveau de gris n'est pas nul, théoriquement, uniquement pour les pixels correspondant à un rayon ayant traversé de l'os. Pour les pixels correspondant à la projection d'une structure osseuse, le niveau de gris est alors proportionnel au produit densité-épaisseur d'os, ou plus exactement à l'intégrale de la densité osseuse le long du rayon, le coefficient de proportionnalité ne dépendant pas des matériaux (tissus mous) présents autour de l'os.

Différents défauts amenés par le système d'acquisition des images radiologiques bidimensionnelles ont amené à adapter la phase de calibration de façon à y inclure une correction de ces défauts.

En effet, d'une part le rendement des cellules détectrices n'est pas uniforme sur toute la surface du détecteur, et n'est pas une fonction linéaire de l'intensité incidente. D'autre part, le spectre d'émission des rayons X n'est pas isotrope. Enfin, le rayonnement diffusé introduit une différence supplémentaire entre les mesures U et V, et l'intégrale des coefficients d'absorption.

Ainsi, lorsqu'on expose le détecteur à un rayonnement au travers d'un matériau homogène d'épaisseur constante, ou bien lorsqu'on prend une image "à feu nu", le niveau de gris obtenu dans l'image n'est pas uniforme, mais présente des variations "basse fréquence" dont on donne un exemple figure 7. Ces "distorsions densitométriques" dépendent d'un nombre important de facteurs, tels que les paramètres géométriques de l'acquisition (distance source - détecteur, distance objet-détecteur, rayon de courbure du détecteur...), la nature exacte du spectre d'émission des rayons X dans toutes les directions (puisque celui-ci n'est pas isotrope), le rendement de l'amplificateur d'images, fonction de l'énergie et de l'intensité des rayons incidents...

Dans le calcul de l'image "épaisseur équivalente" décrit dans le paragraphe précédent, il est implicite que le système d'acquisition utilisé est un système "parfait", n'introduisant pas de non-uniformités. Ce n'est pas le cas en réalité. On pourrait rendre le système parfait si on avait une connaissance exacte de la fonction de transfert, en effectuant une correction a priori des mesures.

Dans l'état de l'art, lors d'une combinaison "double énergie", les coefficients $c_{ij}$ sont estimés globalement sur toute la surface de détection, et ne dépendent pas de la position spatiale du point de mesure sur le détecteur. Dans l'état de l'art, ces coefficients sont le plus souvent estimés à partir de mesures effectuées sur deux images (une pour chaque énergie) d'une "marche d'escalier" de Polyméthacrylate croisée avec une autre "marche d'escalier" d'aluminium. Les non-uniformités dans les mesures qui ne sont pas (ou qui sont imparfaitement) corrigées se traduisent alors par des erreurs dans l'estimation des épaisseurs équivalentes. Ces erreurs, si l'on ne s'intéresse qu'à un aspect qualitatif de l'image, ne sont généralement pas prohibitives.

Dans le cas qui nous intéresse, qui est celui de la reconstruction 3D sélective à partir d'images combinées par double-énergie, il est nécessaire au contraire que les images "épaisseur équivalente" soient porteuses d'une information quantitative. Par exemple, pour une image "épaisseur équivalente d'os", il est nécessaire que le niveau de gris de chaque pixel soit bien proportionnel à l'épaisseur réelle d'os traversée, ou bien à l'intégrale des densités osseuses le long du trajet (le coefficient de proportionnalité étant constant spatialement). Si cette condition n'est pas vérifiée, les données servant à la reconstruction seront dites "non consistantes" et amèneront à la génération d'artefacts de reconstruction.

Pour obtenir cette information quantitative sur toute l'image, plutôt que de corriger a priori le système, on procède en considérant que chaque pixel est un détecteur indépendant, et on estime pixel par pixel l'épaisseur équivalente, c'est-à-dire qu'implicitement, à chaque pixel (x,y) de l'image 14 ou 18 correspond un jeu de coefficients $c_{ij}$ (x,y) dépendant de la position de ce pixel. La généralisation que l'on a adoptée en XIV permet de tenir compte, pour chaque pixel, des distorsions de mesure décrites ci-dessus qui se traduisent notamment par une inexactitude de la formule XVI.

Le calcul des jeux de coefficients $c_{ij}$ (x,y) pour chaque pixel de l'image est lourd, puisqu'il conduit à l'inversion d'une matrice des mesures, en plus au sens des moindres carrés, autant de fois qu'il y a de pixels dans l'image. Pour éviter d'estimer les coefficients $c_{ij}$ (x,y) en tout point de l'image, et pour toutefois tenir compte de leur variation spatiale, qui est une variation basse fréquence, on a choisi dans cette méthode d'estimer les coefficients en un certain nombre de points répartis sur un maillage carré de l'image, par exemple 32 x 32. Puis on estime les coefficients pour les pixels intermédiaires par une méthode d'interpolation, par exemple une interpolation bilinéaire.

Les mesures pour chacun des 32 x 32 points sont effectuées à partir d'un jeu d'images, dites mires de calibration, qui sont les images obtenues en interposant entre la source et le détecteur une plaque d'épaisseur constante de Polyméthacrylate superposée à une plaque d'épaisseur constante d'aluminium, et ceci pour un certain nombre de couples d'épaisseurs $(t_{Po}, t_{Al})$, la surface des plaques étant plus importante que la surface du détecteur. Ce jeu d'images contient toutes les informations nécessaires à la calibration. Le calcul des mesures $Ln(G_0/G)$ pour chacun des 32 x 32 points choisis est effectué en remplaçant G et $G_0$ par une valeur estimée sur une fenêtre centrée autour du point choisi. Cette valeur est par exemple la valeur moyenne des niveaux de gris sur la fenêtre, ou bien la valeur médiane, ceci en vue de limiter les erreurs apportées par le bruit quantique.

**Revendications**

1. Procédé d'imagerie radiologique de la structure osseuse du corps d'un patient, comportant
   - une acquisition d'images radiologiques, en projection à deux dimensions, du corps du patient selon une première série d'orientations et avec une première énergie donnée d'un rayonnement X,
   - la réitération de cette acquisition selon une deuxième série d'orientations, avec une deuxième énergie donnée du rayonnement X, les orientations de cette deuxième série d'orientations étant les mêmes que celles de la première série,
   - la combinaison énergétique deux à deux des images en projection à deux dimensions correspondant à ces deux acquisitions pour produire un premier jeu d'images en projection à deux dimensions du corps du patient, représentatives de cette structure osseuse seule, et
   - la mise en oeuvre d'un algorithme de reconstruction de cette structure à partir des images de ce jeu,
   caractérisé en ce que
   - cet algorithme est du type détection-estimation dont le temps de calcul est proportionnel au nombre d'éléments de volume appartenant à la structure osseuse à reconstruire.

2. Procédé d'imagerie radiologique de la structure osseuse 3 D et du réseau vasculaire 3 D d'un patient, comportant les étapes suivantes:
   - une acquisition d'images radiologiques en projection à deux dimensions du corps du patient selon une première série d'orientations, avec une première énergie donnée d'un rayonnement X
   - la réitération de cette acquisition selon une deuxième série d'orientations, avec une deuxième énergie donnée du rayonnement X, la deuxième série d'orientations comportant au moins les orientations contenues dans la première série d'orientations
   - la combinaison énergétique deux à deux des images en projection à deux dimensions correspondant aux orientations communes à ces deux acquisitions, pour produire un premier jeu d'images en projection à deux dimensions du corps du patient représentatives de la seule structure osseuse de ce patient,
   - la mise en oeuvre d'un algorithme de reconstruction de cette structure osseuse à partir des images de ce premier jeu,
   caractérisé en ce qu'il comporte:
   - une acquisition d'images radiologiques en projection à deux dimensions du corps du patient selon une troisième série d'orientations, avec la deuxième énergie du rayonnement X et après injection d'un produit de contraste dans le réseau vasculaire de ce patient, cette troisième série d'orientations contenant au moins une ou toutes les orientations contenues dans la deuxième série,
   - la soustraction deux à deux des images en projection à deux dimensions correspondant aux orientations communes à la deuxième et à la troisième séries. d'orientations pour produire un deuxième jeu d'images en projection à deux dimensions du corps du patient représentatives de ce réseau vasculaire, et
   - la mise en oeuvre d'un algorithme de reconstruction de ce réseau vasculaire à partir des images de ce deuxième jeu en vue de la représentation de ce réseau vasculaire, combinée avec la représentation de la structure osseuse, et
   - en ce que les reconstructions de la structure osseuse et du réseau vasculaire sont entreprises séparément, chacune en appliquant un algorithme de détection-estimation dont le temps de calcul est proportionnel au nombre d'éléments de volume appartenant à la structure osseuse à reconstruire.

3. Procédé d'imagerie radiologique de la structure osseuse 3 D et du réseau vasculaire 3 D d'un patient, comportant les étapes suivantes:
   - une acquisition d'images radiologiques en projection à deux dimensions du corps du patient selon une première série d'orientations, avec une première énergie donnée d'un rayonnement X
   - la réitération de cette acquisition selon une deuxième série d'orientations, avec une deuxième énergie donnée du rayonnement X, la deuxième série d'orientations comportant au moins les orientations contenues dans la première série d'orientations
   - la combinaison énergétique deux à deux des images en projection à deux dimensions correspondant aux orientations communes à ces deux acquisitions, pour produire un premier jeu d'images en projection à deux dimensions du corps du patient représentatives de la seule structure osseuse de ce patient,
   caractérisé en ce qu'il comporte:

- une acquisition d'images radiologiques en projection à deux dimensions du corps du patient selon une troisième série d'orientations, avec la deuxième énergie du rayonnement X et après injection d'un produit de contraste dans le réseau vasculaire de ce patient, cette troisième série d'orientations contenant au moins une ou toutes les orientations contenues dans la deuxième série,
- la soustraction deux à deux des images en projection à deux dimensions correspondant aux orientations communes à la deuxième et à la troisième séries d'orientations pour produire un deuxième jeu d'images en projection à deux dimensions du corps du patient représentatives de ce réseau vasculaire, et
- l'obtention d'un troisième jeu d'images par combinaison, élément d'image à élément d'image, des éléments d'images des images des deux premiers jeux,
- la reconstruction de ce réseau vasculaire et de cette structure osseuse simultanément à partir des images de ce troisième jeu en vue de la représentation de ce réseau vasculaire, combinée avec la représentation de la structure osseuse, en mettant en oeuvre une seule fois un algorithme de reconstruction du type détection-estimation dont le temps de calcul est proportionnel au nombre d'éléments de volume appartenant aux structures vasculaire et osseuse à reconstruire.

4. Procédé selon l'une quelconque des revendications 2 à 3, caractérisé en ce que la représentation combinée comporte une représentation bicolore simultanée de la structure osseuse et du réseau vasculaire.

5. Procédé selon l'une quelconque des revendications 2 à 4, caractérisé en ce que la représentation combinée comporte la représentation en transparence de la structure osseuse, c'est à dire avec un contraste lumineux entre des éléments d'image représentatifs de la structure osseuse et des éléments d'image représentatifs du fond de l'image moins fort que le contraste lumineux entre des éléments d'image représentatifs du réseau vasculaire et ces éléments d'image représentatifs du fond de l'image.

6. Procédé selon l'une quelconque des revendications 1 à 5, caractérisé en ce que la combinaison énergétique deux à deux des images en projection à deux dimensions acquises alors que le rayonnement X est émis avec des énergies différentes comporte
- la calibration, pour ces deux énergies, des acquisitions en fonction d'empilages d'épaisseurs de deux matériaux, ces deux matériaux ayant des comportements en absorption radiologique différents, pour obtenir deux groupes de coefficients décrivant respectivement le comportement en absorption radiologique de chacun de ces deux matériaux,
- le calcul, en chaque point des images en projection à deux dimensions du premier jeu, des épaisseurs équivalentes en ces deux matériaux, en fonction de cette calibration et en fonction des images en projection à deux dimensions obtenues avec les deux énergies,
- et, par déduction, le calcul en chacun de ces points d'une grandeur représentative de la projection de la structure osseuse seule par prise en compte d'une épaisseur en un seul de ces matériau.

7. Procédé selon la revendication 6, caractérisé en ce que la calibration est effectuée, pour un détecteur à deux dimensions utilisé pour les acquisitions, élément d'image par élément d'image, de façon à obtenir deux groupes de coefficients pour chacun des éléments d'image du détecteur.

8. Procédé selon la revendication 7, caractérisé en ce que pour effectuer la calibration élément d'image par élément d'image,
- on mesure les effets d'absorption en un ensemble de points choisis,
- on calcule les coefficients en ces points choisis, et
- on déduit par interpolation bilinéaire les coefficients en des points intermédiaires entre ces points choisis.

## Patentansprüche

1. Röntgenologisches Verfahren zum Abbilden der Knochenstruktur des Körpers eines Patienten, enthaltend
- eine Erfassung zweidimensionaler, röntgenologischer Bilder des Patientenkörpers gemäß einer ersten Folge von Orientierungen und mit einer ersten gegebenen Energie eines Röntgenstrahls,
- die Wiederholung dieser Erfassung gemäß einer zweiten Folge von Orientierungen mit einer zweiten gegebenen Röntgenstrahlenenergie, wobei die Orientierungen dieser zweiten Folge die gleichen wie die der ersten Folge sind,

- die energetische Kombination von Paaren der zweidimensionalen Bilder entsprechend den zwei Erfassungen zur Erzeugung einer ersten Gruppe von zweidimensionalen Bildern des Patientenkörpers, die allein dessen Knochenstruktur darstellen, und
- die Durchführung eines Algorithmus zum Rekonstruieren dieser Struktur anhand von Bildern dieser Gruppe,

dadurch gekennzeichnet, däß

- dieser Algorithmus vom Typ Detektion-Schätzung ist, dessen Rechenzeit der Anzahl von Volumenelementen proportional ist, die zu der zu rekonstruierenden Knochenstruktur gehören.

2. Röntgenologisches Verfahren zum Abbilden der dreidimensionalen Knochenstruktur und des dreidimensionalen Gefäßsystems eines Patienten, enthaltend die folgenden Schritte:
   - eine Erfassung zweidimensionaler, röntgenologischer Bilder des Patientenkörpers gemäß einer ersten Folge von Orientierungen und mit einer ersten gegebenen Energie eines Röntgenstrahls,
   - die Wiederholung dieser Erfassung gemäß einer zweiten Folge von Orientierungen mit einer zweiten gegebenen Röntgenstrahlenenergie, wobei die zweite Folge von Orientierungen zumindest die in der ersten Folge von Orientierungen enthaltenen Orientierungen umfaßt,
   - die energetische Kombination von Paaren der zweidimensionalen Bilder entsprechend den gemeinsamen Orientierungen bei den zwei Erfassungen zur Erzeugung einer ersten Gruppe von zweidimensionalen Bildern des Patientenkörpers, die allein dessen Knochenstruktur darstellen,
   - die Durchführung eines Algorithmus zum Rekonstruieren dieser Knochenstruktur anhand von Bildern dieser ersten Gruppe,

   dadurch gekennzeichnet, daß es enthält:
   - eine Erfassung zweidimensionaler röntgenologischer Bilder des Patientenkörpers gemäß einer dritten Folge von Orientierungen mit der zweiten Röntgenstrahlungsenergie und nach dem Einspritzen eines Kontrastmittels in das Gefäßsystem dieses Patienten, wobei diese dritte Folge von Orientierungen wenigstens eine oder alle Orientierungen umfaßt, die in der zweiten Serie enthalten sind,
   - die paarweise Subtraktion der zweidimensionalen Bilder entsprechend den gemeinsamen Orientierungen der zweiten und der dritten Orientierungsfolge zur Erzeugung einer zweiten Gruppe von zweidimensionalen Bildern des Patientenkörpers, die das Gefäßsystem darstellen, und
   - die Durchführung eines Algorithmus zum Rekonstruieren des Gefäßsystems anhand von Bildern dieser zweiten Gruppe im Hinblick auf die Darstellung dieses Gefäßsystems in Kombination mit der Darstellung der Knochenstruktur, und
   - daß die Rekonstruktionen der Knochenstruktur und des Gefäßsystems getrennt jeweils unter Anwendung eines Detektions- und Schätzalgorithmus durchgeführt werden, dessen Rechenzeit der Anzahl von Volumenelementen proportional ist, die zu der zu rekonstruierenden Knochenstruktur gehören.

3. Röntgenologisches Verfahren zum Abbilden der dreidimensionalen Knochenstruktur und des dreidimensionalen Gefäßsystems eines Patienten, enthaltend die folgenden Schritte:
   - eine Erfassung zweidimensionaler, röntgenologischer Bilder des Patientenkörpers gemäß einer ersten Folge von Orientierungen und mit einer ersten gegebenen Energie eines Röntgenstrahls,
   - die Wiederholung dieser Erfassung gemäß einer zweiten Folge von Orientierungen mit einer zweiten gegebenen Röntgenstrahlenenergie, wobei die zweite Folge von Orientierungen zumindest die in der ersten Folge von Orientierungen enthaltenen Orientierungen umfaßt,
   - die energetische Kombination von Paaren der zweidimensionalen Bilder entsprechend den gemeinsamen Orientierungen bei den zwei Erfassungen zur Erzeugung einer ersten Gruppe von zweidimensionalen Bildern des Patientenkörpers, die allein dessen Knochenstruktur darstellen,

   dadurch gekennzeichnet, daß es umfaßt:
   - eine Erfassung zweidimensionaler röntgenologischer Bilder des Patientenkörpers gemäß einer dritten Folge von Orientierungen mit der zweiten Röntgenstrahlungsenergie und nach dem Einspritzen eines Kontrastmittels in das Gefäßsystem dieses Patienten, wobei diese dritte Folge von Orientierungen wenigstens eine oder alle Orientierungen umfaßt, die in der zweiten Serie enthalten sind,
   - die paarweise Subtraktion der zweidimensionalen Bilder entsprechend den gemeinsamen Orientierungen der zweiten und der dritten Orientierungsfolge zur Erzeugung einer zweiten Gruppe von zweidimensionalen Bildern des Patientenkörpers, die das Gefäßsystem darstellen, und
   - Erhalten einer dritten Gruppe von Bildern durch bildelementweises Kombinieren von Bildelementen der Bilder der zwei ersten Gruppen,
   - die Rekonstruktion dieses Gefäßsystems und dieser Knochenstruktur gleichzeitig anhand der Bilder der dritten Gruppe im Hinblick auf die Darstellung dieses Gefäßsystems kombiniert mit der Darstellung der Knochenstruktur, indem ein einziges Mal ein Rekonstruktionsalgorithmus vom Typ Detektion-Schätzung durchgeführt wird, dessen Rechenzeit der Anzahl von Volumenelementen proportional ist, die zu den zu rekonstruierenden Gefäß- und Knochenstrukturen gehören.

4.  Verfahren nach einem der Ansprüche 2 bis 3, dadurch gekennzeichnet, daß die kombinierte Darstellung eine zweifarbige gleichzeitige Darstellung der Knochenstruktur und des Gefäßsystems beinhaltet.

5.  Verfahren nach einem der Ansprüche 2 bis 4, dadurch gekennzeichnet, daß die kombinierte Darstellung die durchsichtige Darstellung der Knochenstruktur beinhaltet, d.h. mit einem weniger starken Leuchtkontrast zwischen den die Knochenstruktur repräsentierenden Bildelementen und den den Bildhintergrund repräsentierenden Bildelementen als dem Leuchtkontrast zwischen den das Gefäßsystem repräsentierenden Bildelementen und diesen, den Bildhintergrund repräsentierenden Bildelementen.

6.  Verfahren nach einem der Ansprüche 1 bis 5, dadurch gekennzeichnet, daß die energetische Kombination von Paaren der zweidimensionalen Bilder, die erfaßt werden, während die Röntgenstrahlung mit unterschiedlichen Energien ausgesendet wird, umfaßt:
    - das Eichen der Erfassungen für die zwei Energien abhängig von der Übereinanderschichtung von zwei Materialstärken, wobei diese zwei Materialien unterschiedliche röntgenologische Absorptionsverhalten jedes der beiden Materialien beschreiben,
    - das Berechnen der äquivalenten Dicken der zwei Materialien an jedem Punkt der zweidimensionalen Bilder der ersten Gruppe in Abhängigkeit von dieser Eichung und in Abhängigkeit von den mit den zwei Energien erhaltenen zweidimensionalen Bildern,
    - und durch Deduktion das Berechnen einer allein die Projektion der Knochenstruktur repräsentierenden Größe für jeden dieser Punkte durch Berücksichtigen einer Dicke nur eines dieser Materialien.

7.  Verfahren nach Anspruch 6, dadurch gekennzeichnet, daß das Eichen bei einem für die Erfassungen angewendeten zweidimensionalen Detektor bildelementweise so durchgeführt wird, daß für jedes der Bildelemente des Detektors zwei Gruppen von Koeffizienten erhalten werden.

8.  Verfahren nach Anspruch 7, dadurch gekennzeichnet, daß zur Durchführung der bildelementweisen Eichung
    - die Absorptionswirkungen bei einer Gruppe ausgewählter Punkte gemessen wird,
    - die Koeffizienten bei diesen gewählten Punkten berechnet werden und
    - die Koeffizienten an Punkten zwischen den ausgewählten Punkten durch bilineare Interpolation abgeleitet werden.

## Claims

1.  X-ray method for the bone structure of a patient, comprising:
    - acquisition of two-dimensionally projected X-ray images of the patient's body according to a first series of orientations and with a given first energy of an X-ray;
    - the repetition of this acquisition according to a second series of orientation, with a given second energy of the X-ray, the orietnation of this second series of orientations being the same as that of the first series;
    - the energy combination two by two of the two-dimensionally projected images corresponding to the said two acquisitions in order to produce a first set of two-dimensionally projected images of the patient's body which are representative of this bone structure alone, and
    - the use of an algorithm for reproducing this structure from the images of the said set,
    characterised by the fact that
    - the said algorithm is of the detection-estimation type of which the calculating time is proportional to the number of volume elements belonging to the bone structure to be reconstructed.

2.  X-ray method for the bone structure in 3 D and of the vascular system in 3 D of the patient, comprising the following stages:
    - an acquisition of two-dimensionally projected X-ray images of the patient's body according to a first series of orientations, with a given first energy of an X-ray,
    - the repetition of this acquisition according to a second series of orientations, with a given second energy of the X-ray, the second series of orientations comprising at least the orientations contained in the first series of orientations,
- the energy combination two by two of the two-dimensionally projected images corresponding to the orientations common to the said two acquisitions, to produce a first set of two-dimensionally projected images of the patient's body which are only representative of the bone structure of this patient,
- the use of an algorithm for the reconstruction of the said bone structure from the images of the said first set,

characterised by the fact that it comprises:
- an acquisition of two-dimensionally projected X-ray images of the patient's body according to a third series of orientations, with the second energy of the X-ray and after the injection of a contrast product into the patient's vascular system, this third series of orientations containing at least one or all the orientations contained in the second series,
- the subtraction two by two of the two-dimensionally projected images corresponding to the orientations common to the second and third series of orientations in order to produce a second set of two-dimensionally projected images of the patient's body which will be representative of the said vascular system, and
- the use of an algorithm for the reconstruction of the said vascular system from the images of the said second set for the purpose of representing the vascular system, combined with the representation of the bone structure, and

by the fact that the reconstructions of the bone structure and of the vascular system are effected separately, each by applying a detection-estimation algorithm of which the calculation time is proportional to the number of volume elements belonging to the bone structure to be reconstructed.

3. X-ray method for the bone structure in 3 D and of the vascular system in 3 D of a patient, comprising the following stages:
- an acquisition of two-dimensionally projected X-ray images of the patient's body according to a first series of orientations, with a given first energy of an X-ray,
- the repetition of this acquisition according to a second series of orientations, with a given second energy of the X-ray, the second series of orientations comprising at least the orientations contained in the first series of orientations,
- the energy combination two by two of the two-dimensionally projected images corresponding to the orientations common to the said two acquisitions, in order to produce a first set of two-dimensionally projected images of the patient's body which will only be representative of the said patient's bone structure,

characterised by the fact that is comprises:
- an acquisition of two-dimensionally projected X-ray images of the patient's body according to a third series of orientations with the second energy of the X-ray and after the injection of a contrast product into the said patient's vascular system, this third series of orientations contained in the second series,
- the subtraction two by two of the two-dimensionally projected images corresponding to the orientations common to the second and to the third series of orientations in order to produce a second set of two-dimensionally projected images of the patient's body which will be representative of the said vascular system, and
- the operation of obtaining a third set of images by the combination, image element to image element, of the image elements of the images of the first two sets,
- the reconstruction of this vascular system and of this bone structure simultaneously from the images of the said third set in order to represent this vascular system, combined with the representation of the bone structure, making use, once only, of a reconstruction algorithm of the detection-estimation type of which the calculating time is proportional to the number of volume elements belonging to the vascular structure and bone structure to be reproduced.

4. Process in accordance with either of claims 2 to 3 characterised by the fact that the combined representation comprises a simultaneous two-colour representation of the bone structure and of the vascular system.

5. Process in accordance with any one of claims 2 to 4 characterised by the fact that the combined representation comprises the transparent representation of the bone structure, i.e. with a luminous contrast between image elements representative of the bone structure and image elements representative of the background of the image, less intense than the luminous contrast between image elements representative of the vascular system and the said image elements representative of the background of the image.

6. Process in accordance with any one of claims 1 to 5 characterised by the fact that the energy combination two by two of the two-dimensionally projected images acquired when the X-ray is emitted with different energies comprises:
   - the calibration, for these two energies, of the acquisitions as a function of piles of thicknesses of two materials, these two materials having different X-ray absorption characteristics, in order to obtain two groups of coefficients describing the respective X-ray absorption characteristics of these two materials,
   - the calculation, at each point of the two-dimensionally projected images of the first set, of the equivalent thicknesses in these two materials, as a function of the said calibration and as a function of the two-dimensionally projected images obtained with the two energies,
   - and, by deduction, the calculation, at each of the said points, of a magnitude representative of the projection of the bone structure alone, by taking account of a thickness of one only of these materials.

7. Process in accordance with claim 6 characterised by the fact that the calibration is effected, image element by image element, for a two-dimensional detector used for the acquisitions, in such a way as to obtain two groups of coefficients for each of the image elements of the detector.

8. Process in accordance with claim 7, characterised by the fact that in order to effect the image element by image element calculation,
   - the absorption effects are measured at a set of selected points,
   - the coefficients are calculated at these selected points, and
   - the coefficients at intermediate points between the said selected points are deduced by bilinar interpolation.

# FIG_1

# FIG_2

# FIG_3

# FIG_4

FIG_5

FIG_6

Spectres d emission 50 et 100KV

① : 2 mm Al    ③  2 mm Cu
② + 6cm Po    ④ + 6cm Po

FIG_7

Image à feu nu
50 kV